Europäisches Patentamt

European Patent Office

Office européen des brevets

(11) Veröffentlichungsnummer: **0 400 161 B1**

(19)

(12) # EUROPÄISCHE PATENTSCHRIFT

(45) Veröffentlichungstag der Patentschrift: **03.08.94**

(51) Int. Cl.[5]: **G02B 6/42**

(21) Anmeldenummer: **89109671.1**

(22) Anmeldetag: **29.05.89**

(54) **Anordnung zum optischen Koppeln eines elektrooptischen Wandlermoduls mit einem Lichtwellenleiter mittels zweier Linsen.**

(43) Veröffentlichungstag der Anmeldung:
**05.12.90 Patentblatt 90/49**

(45) Bekanntmachung des Hinweises auf die Patenterteilung:
**03.08.94 Patentblatt 94/31**

(84) Benannte Vertragsstaaten:
**DE FR GB IT**

(56) Entgegenhaltungen:

JOURNAL OF OPTICAL COMMUNICATIONS, Band 9, Nr. 2, Juni 1988, Seiten 42-49, Fachverlag Schiele & Schön, Berlin, DE; H. KARSTENSEN: "Laser Diode to Single-Mode Fiber Coupling with Ball Lenses"

PATENT ABSTRACTS OF JAPAN, Band 11, Nr. 170 (P-581)[2617], 2. Juni 1987;& JP-A-62 2217

PATENT ABSTRACTS OF JAPAN, Band 10, Nr. 52 (P-432)[2109], 28. Februar 1986;& JP-A-60 196 710

PATENT ABSTRACTS OF JAPAN, Band 10, Nr. 173 (P-469)[2229], 18. Juni 1986;& JP-A-61

22 311

(73) Patentinhaber: **SIEMENS AKTIENGESELL-SCHAFT**
**Wittelsbacherplatz 2**
**D-80333 München(DE)**

(72) Erfinder: **Bialas, Joachim, Dr.rer.nat.**
**Bolzweg 3**
**D-8024 Deisenhofen(DE)**
Erfinder: **Greil, Andreas, Dipl.-Phys.**
**Preysingstrasse 32**
**D-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine optische Anordnung mit einem elektrooptischen Wandlermodul und einem Lichtwellenleiter sowie mit zwei Linsen nach dem Oberbegriff des Anspruchs 1.

Für die optische Nachrichtenübermittlung werden elektrooptische Wandlermodule benötigt. Derartige Sende- und/oder Empfängermodule müssen mit einem Lichtwellenleiter beispielsweise in Form einer Monomode-Glasfaserübertragungsstrecke optisch gekoppelt werden.

Die Koppeloptik zwischen dem Monomode-Lichtwellenleiter und den elektrooptischen Komponenten besteht dabei bekanntlich aus einer Linse vor einer als Sender dienenden Laserdiode und einer zweiten Linse vor dem Lichtwellenleiter. Die Linsen und die Lichtleitfaser liegen dabei auf der durch den Strahlengang der Laserdiode definierten Achse.

Durch die Rückreflexion an den spiegelnden Flächen der Koppeloptik wird der Laser in seiner Lichtleistung und/oder Phase gestört. Dadurch kann die Bitfehlerrate im System erhöht werden.

Das gilt auch für Empfängermodule, bei denen zum optischen Koppeln eine Linsenkoppeloptik zwischen der Lichtwellenleiter-(LWL-)Faser und beispielsweise einer als Empfänger dienenden Fotodiode eingesetzt wird. Auch die Lichtreflexe dieser Koppeloptik können den Laser stören.

Bekannte Maßnahmen, diese störenden Rückreflexe entweder durch Entspiegelung oder durch einen optischen Isolator zu unterdrücken, sind unzureichend und verursachen zudem zusätzliche Kosten.

Der Erfindung liegt die Aufgabe zugrunde, bei einer Anordnung zum optischen Koppeln eines elektrooptischen Wandlermoduls mit einem Lichtwellenleiter mittels zweier Linsen der eingangs genannten Art, diese störenden Rückreflexe drastisch zu verringern, ohne dabei den Koppelwirkungsgrad der Anordnung zu mindern, die zudem leicht und kostengünstig realisierbar sein soll.

Diese Aufgabe wird erfindungsgemäß durch eine Anordnung mit den Merkmalen des Anspruchs 1 gelöst.

Vorteilhafte Ausgestaltungen bzw. Weiterbildungen der Erfindung sind Gegenstand zusätzlicher Ansprüche.

Die mit der Erfindung erzielten Vorteile bestehen insbesondere darin, daß die störenden Rückreflexe durch nichtaxiales Einkoppeln drastisch vermindert werden. Die beiden Linsen und die LWL-Faser liegen nun nicht mehr auf der durch die Strahlung der Laserdiode definierten Achse.

Der Koppelwirkungsgrad der Anordnung wird dabei praktisch nicht gemindert. Die Anordnung ist technisch leicht realisierbar und verursacht keine zusätzlichen Kosten.

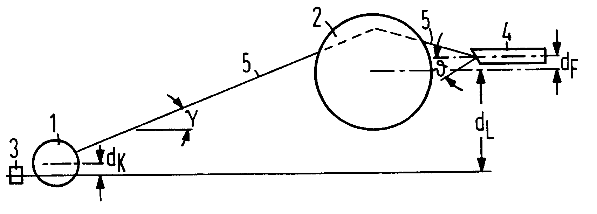

Anhand eines in der Figur der Zeichnung rein schematisch dargestellten, bevorzugten Ausführungsbeispiels wird die Erfindung naher erläutert.

Die in der Figur dargestellte Anordnung bzw. Linsenkoppeloptik besteht im wesentlichen aus einem elektrooptischen Wandlermodul 3, der in diesem Beispiel als Lichtsender in Form einer Laserdiode ausgebildet ist. Die in diesem Wandlermodul 3 erzeugte optische Strahlung wird mit Hilfe von zwei Linsen 1 und 2, vorzugsweise Kugellinsen, in einen Lichtwellenleiter 4, beispielsweise eine Monomode-Lichtleitfaser, eingekoppelt. Dabei ist eine erste Linse 1 vor dem elektrooptischen Wandlermodul 3 angeordnet. Die zweite Linse 2 ist dem Lichtwellenleiter 4 zugeordnet und befindet sich im Strahlengang 5 vor diesem optischen Bauteil. Die optische Achse der ersten Linse 1 ist gegenüber der optischen Achse des elektrooptischen Wandlermoduls 3 axial versetzt, und die optische Achse der zweiten Linse 2 ist gegenüber der optischen Achse des Lichtwellenleiters 4 axial versetzt. Außerdem sind die optischen Achsen der beiden im Strahlengang 5 zwischen Wandlermodul 3 und Lichtleitfaser 4 angeordneten Linsen 1, 2 zueinander axial versetzt. Zur Reflexionsminderung ist die der zweiten Linse 2 zugewandte Stirnfläche des Lichtwellenleiters 4 vorzugsweise abgeschrägt, und zwar zweckmäßig in Form eines Schrägschliffes. Durch dieses vorteilhafte Abschrägen der Stirnfläche des Lichtwellenleiters 4 bildet diese mit dessen optischer Achse einen Schliffwinkel $\vartheta$. Um die Rückreflexion von der Faserstirnfläche um 80db zu vermindern, ist ein Schliffwinkel $\vartheta$ von ca. 7° ausreichend. Ein zwischen der Achse des Lichtwellenleiters 4 und der Achse des aus der ersten Linse austretenden Lichtbündels 5 gebildeter Schielwinkel $\gamma$ beträgt zweckmäßig bis zu 8°. Der Schielwinkel $\gamma$ hängt dabei von dem Schliffwinkel $\vartheta$ und dem axialen Versatz $d_F$ der optischen Achse des Lichtwellenleiters 4 gegenüber der optischen Achse der diesem zugeordneten zweiten Linse 2 ab.

Die Anordnung ist vorteilhaft so aufgebaut, daß bei einem vorgegebenen Schliffwinkel $\vartheta$ die Größen des axialen Versatzes $d_F$ des Lichtwellenleiters 4, des axialen Versatzes $d_K$ des elektrooptischen Wandlermoduls 3 (d.h. dessen optischer Achse gegenüber der optischen Achse der ihm zugeordneten Linse 1) und des axialen Versatzes $d_L$ der Linsen 1, 2 (d.h. deren optischer Achsen zueinander) auf optimalen Koppelwirkungsgrad bei minimaler Rückreflexion einstellbar sind.

Beispielsweise entsteht bei einem axialen Strahlverlauf und ohne Schrägschliff der Faser bzw. des Lichtwellenleiters ($\gamma = 0$, $\vartheta = 0$, $d_F = 0$) eine hohe Rückreflexion von -18dB an der Stirnfläche der Faser bezogen auf die Spiegelleistung der Laserdiode. Eine wesentliche Unterdrückung dieses Reflexes auf -40dB erreicht man schon durch Schrägschliff der Faser um 4°. Durch Nachjustieren von $d_F$ ($d_F$ = 10μm) wird erreicht, daß der Koppelwirkungsgrad Laser - Faser sich nicht verschlechtert.

Eine weitere Einstellmöglichkeit der Anordnung besteht darin, daß man die Abstände vom elektrooptischen Wandlermodul 3 zur ersten Linse 1, von der ersten Linse 1 zur zweiten Linse 2 und vom Lichtwellenleiter 4 zur zweiten Linse 2 variieren kann, und zwar in Abhängigkeit z.B. vom Kerndurchmesser der verwendeten Lichtwellenleiter-Faser und/oder vom Leuchtfleck der verwendeten Laserdiode, so daß die Anordnung in jedem Anwendungsfall stets auf maximale Lichteinkopplung einstellbar ist.

## Patentansprüche

1. Optische Anordnung mit einem elektrooptischen Wandlermodul und einem Lichtwellenleiter sowie mit zwei Linsen zum optischen koppeln des Wandlermoduls mit dem Lichtwellenleiter, von denen eine erste vor dem Wandlermodul und die zweite vor dem Lichtwellenleiter angeordnet ist, wobei die optische Achse der ersten Linse gegenüber der optischen Achse des Wandlermoduls und die optische Achse der zweiten Linse gegenüber der optischen Achse des Lichtwellenleiters axial versetzt ist, und wobei die optischen Achsen der ersten Linse und der zweiten Linse parallel zueinander versetzt sind, **dadurch gekennzeichnet**, daß die der zweiten Linse (2) zugeordnete Stirnfläche des Lichtwellenleiters (4) in Form eines Schrägschliffes zu dessen optischer Achse in einem Schliffwinkel $\vartheta$ geneigt ist.

2. Anordnung nach Anspruch 1, **dadurch gekennzeichnet**, daß die beiden Linsen (1, 2) Kugellinsen sind.

3. Anordnung nach Anspruch 1 oder 2, **dadurch gekennzeichnet**, daß der durch Abschrägen der Stirnfläche des Lichtwellenleiters (4) mit dessen optischer Achse gebildete Schliffwinkel $\vartheta$ bis zu ungefähr 7° beträgt.

4. Anordnung nach einem der Ansprüche 1 bis 3, **dadurch gekennzeichnet**, daß ein zwischen der Achse des Lichtwellenleiters (4) und der Achse des aus der Linse (1) austretenden Lichtbündels gebildeter Schielwinkel $\gamma$ in Abhängigkeit vom axialen Versatz $d_F$ des Lichtwellenleiters (4) und vom Schliffwinkel $\vartheta$ bis zu ungefähr 8° beträgt.

5. Anordnung nach einem der Ansprüche 1 bis 4, **dadurch gekennzeichnet**, daß bei einem vorgegebenen Schliffwinkel $\vartheta$ in Abhängigkeit vom Schielwinkel $\gamma$ die Größen des axialen Versatzes $d_F$ des Lichtwellenleiters (4), des axialen Versatzes $d_K$ des elektrooptischen Wandlermoduls (3) und des axialen Versatzes $d_L$ der Linsen (1, 2) auf optimalen Koppelwirkungsgrad bei minimaler Rückreflexion einstellbar sind.

## Claims

1. Optical arrangement having an electrooptical transducer module and an optical waveguide and having two lenses for optically coupling the transducer module to the optical waveguide, a first one of which lenses is disposed in front of the transducer module and the second one of which lenses is disposed in front of the optical waveguide, the optical axis of the first lens being axially offset relative to the optical axis of the transducer module and the optical axis of the second lens being axially offset relative to the optical axis of the optical waveguide, and the optical axes of the first lens and of the second lens being offset parallel to one another, characterized in that that end face of the optical waveguide (4) which is associated with the second lens (2) is inclined in the form of a bevel to the optical axis of the optical waveguide at a grinding angle $\vartheta$.

2. Arrangement according to Claim 1, characterized in that the two lenses (1, 2) are spherical lenses.

3. Arrangement according to Claim 1 or 2, characterized in that the grinding angle $\vartheta$ formed by bevelling off the end face of the optical waveguide (4) with its optical axis is up to approximately 7°.

4. Arrangement according to one of Claims 1 to 3, characterized in that a squint angle $\gamma$ formed between the axis of the optical waveguide (4) and the axis of the light beam emerging from the lens (1) is up to approximately 8°, as a function of the axial offset $d_F$ of the optical waveguide (4) and of the grinding angle $\vartheta$.

5. Arrangement according to one of Claims 1 to 4, characterized in that at a predetermined grinding angle $\vartheta$ the magnitudes of the axial offset $d_F$ of the optical waveguide (4), of the axial offset $d_K$ of the electrooptical transducer module (3) and of the axial offset $d_L$ of the lenses (1, 2) are settable, as a function of the squint angle $\gamma$, to the optimum coupling efficiency with minimum back reflection.

**Revendications**

1. Dispositif optique comportant un module de transducteur électro-optique et un guide d'ondes lumineuses, ainsi que deux lentilles destinées à réaliser le couplage optique du module de transducteur au guide d'ondes lumineuses, dont la première est avant le module de transducteur et dont la seconde est avant le guide d'ondes lumineuses, l'axe optique de la première lentille étant décalé axialement par rapport à l'axe optique du module de transducteur, et l'axe optique de la seconde lentille étant décalé axialement par rapport à l'axe optique du guide d'ondes lumineuses, les axes optiques de la première lentille et de la seconde lentille étant décalés parallèlement l'un à l'autre, caractérisé par le fait que la surface frontale, associée à la seconde lentille (2), du guide d'ondes lumineuses (4) est inclinée, sous la forme d'une coupe oblique par rapport à son axe optique, d'un angle d'inclinaison $\vartheta$.

2. Dispositif suivant la revendication 1, caractérisé par le fait que les deux lentilles (1, 2) sont des lentilles sphériques.

3. Dispositif suivant la revendication 1 ou 2, caractérisé par le fait que l'angle d'inclinaison $\vartheta$ formé sous l'effet de l'inclinaison de la surface frontale du guide d'ondes lumineuses (4) par rapport à son axe optique, atteint jusqu'à environ 7°.

4. Dispositif suivant l'une des revendications 1 à 3, caractérisé par le fait qu'un angle bigle $\gamma$, entre l'axe du guide d'ondes lumineuses (4) et l'axe du faisceau de lumière sortant de la lentille (1) atteint jusqu'à environ 8°, en fonction du décalage axial $d_F$ du guide d'ondes lumineuses (4) et de l'angle d'inclinaison $\vartheta$.

5. Dispositif suivant l'une des revendications 1 à 4, caractérisé par le fait que, pour un angle d'inclinaison $\vartheta$ prescrit, on peut régler, en fonction de l'angle bigle $\gamma$, les valeurs du décalage axial $d_F$ du guide d'ondes lumineuses (4), du décalage axial $d_K$ du module de transducteur électrooptique (3) et du décalage axial $d_L$ des lentilles (1, 2), pour obtenir le meilleur rendement de couplage, tout en ayant un minimum de rétroréflexion.

EP 0 400 161 B1

5